# EUROPEAN PATENT SPECIFICATION

(11) **EP 2 077 004 B1**
(45) Date of publication and mention of the grant of the patent: **20.11.2013**
(21) Application number: 07816045.4
(22) Date of filing: 24.10.2007
(51) Int. Cl.: H04L 12/28, H04W 48/16, H04W 84/12

(54) **Methods and apparatuses for WLAN scanning by prevalence of access point deployment on certain channels**
Verfahren und Vorrichtungen für ein WLAN-Scanning durch Prävalenz des Zugangspunkteinsatzes auf bestimmten Kanälen
Dispositifs et procédés de balayage d'un réseau local sans fil par prévalence d'un déploiement de points d'accès sur certains canaux

(30) Priority: 24.10.2006 US 862630 P
(43) Date of publication of application: 08.07.2009
(73) Proprietor: BlackBerry Limited, Waterloo, ON N2L 3W8 (CA)
(72) Inventor: MONTEMURRO, Michael, Toronto, Ontario M6S 1X6 (CA); DURAND, Roger, Amherst, New Hampshire 03031 (US); ABDEL-KADER, Sherif, Waterloo, Ontario N2K 4H7 (CA)
(74) Representative: Moore, Barry
(86) International application number: PCT/CA2007/001895
(87) International publication number: WO 2008/049220

(56) References cited:
- EP-A2- 1 492 276
- WO-A2-2005/032059
- US-A1- 2003 158 922
- US-A1- 2004 090 929
- US-A1- 2004 102 192
- US-A1- 2004 192 328
- US-A1- 2004 266 430
- US-A1- 2005 070 279
- US-A1- 2006 009 216
- US-A1- 2006 142 004

## Description

### BACKGROUND

A wireless local area network (WLAN) client device may store in its memory one or more profiles of wireless local area networks. A profile may include, for example, the service set identity (SSID) of the network, WLAN configuration parameters, security credentials, and Internet Protocol (IP) network parameters. The SSID is also known as the network name. The profiles may be assigned priorities, for example, by a user that has purchased the client device, a carrier who controls the sale of the client device, or an administrator of an enterprise that has purchased the client device.

Scanning is the process of identifying existing networks. Upon being operatively coupled to a radio of the client device, a WLAN controller of the client device may automatically initiate passive scanning. In passive scanning, the WLAN controller generally listens for beacon frames broadcast by access points (APs), one communication channel at a time. The communication channels, and the time spent passively scanning on a communication channel, are defined by the WLAN standard and/or regulatory requirements. Beacon frames of a WLAN are broadcast at regular intervals, for example, roughly each 100 ms. The SSIDs of the profiles stored in the client device are compared to the SSIDs included in beacon frames received by the client device on a particular communication channel. The order in which SSIDs of the profiles are compared to the SSIDs of the scan results may be determined by one or more factors. For example, the SSIDs of the profiles may be compared in order of decreasing priority for the profiles. In another example, the SSIDs of the scan results may be compared in order of decreasing received signal strength. If the SSID field of a received beacon frame matches the SSID of a particular profile, the WLAN controller may initiate an authentication process and, if the authentication process is successful, may initiate an association or re-association process with the AP that sent the beacon frame. If the comparison does not result in any matches, then the client device may present a list of identified networks (based on the SSID fields of any received beacon frames) to the user of the client device, so that the user can select which, if any, of the networks to join.

In active scanning, the WLAN controller transmits an active probe request including an SSID on a communication channel on which the regulatory requirements allow active probing. The WLAN controller may receive one or more probe responses. The probe responses may be received within 15 ms of the transmission of the active probe request. The active probe request may include a particular SSID, in which case probe responses will be received from APs in the vicinity that are hosting a WLAN having the particular SSID. Alternatively, the active probe request may include a "wild card" for an SSID and probe responses may be received from more than one network. In the latter case, the SSIDs of the profiles stored in the client device are compared to the SSIDs included in the probe responses. The order in which SSIDs of the profiles are compared to the SSIDs of the probe responses may be determined by one or more factors. For example, the SSIDs of the profiles may be compared in order of decreasing priority for the profiles. In another example, the SSIDs of the probe responses may be compared in order of decreasing received signal strength. If the SSID included in a probe response matches the SSID of a particular profile, the WLAN controller may initiate an authentication process and, if the authentication process is successful, may initiate an association or re-association process with the AP that sent the probe response. If no probe responses are received, the client device may transmit the active probe request on a different communication channel, or may transmit an active probe request including a different SSID, or may put its radio into a low-power state.

A WLAN may have a suppressed SSID, in which case beacon frames for that WLAN will not include the suppressed SSID. Likewise, an AP having a suppressed SSID may ignore probe requests including a "wild card" SSID, or may respond with a probe response which lacks the SSID. If the client device stores one or more profiles having suppressed SSIDs, the client device may actively scan for those profiles using an active probe request including the suppressed SSID. An AP having a suppressed SSID will respond to such an active probe request with a probe response which includes the suppressed SSID, if the SSID of the networks handled by the AP matches that in the active probe request.

For battery-operated client devices, the process of network discovery and association in a timely manner consumes significant battery life.

US 2006/009216 discloses a method for scanning of channels by a multi-mode communication device, including the steps of making a scan list operative for more than one mode, modifying the scan list to remove all non-current-mode systems, and sequentially scanning a highest priority channel on the modified scan list. If the communication device has recently found service on a particular system in a first mode, the communication device will only search for systems that are associated with that first mode. This use of a modified scan list applies both to power up scanning situations and scanning after power up situations.

EP1492276 relates to a method for accessing an access point (AP) in a wireless local area network (LAN) and a station, especially a method for accessing the AP in the wireless LAN that can access APs worldwide in a wireless LAN from a station which is set in a PC, and a station that can perform worldwide roaming.

US 2005/070279 discloses a method, device and system for selecting channels to be scanned by a wireless device that seeks to associate with a network. A wireless device may determine the area in which it is located, identify channels used for association in such area and select such identified channels for scanning. The ordering of channels may be based on prior associations of the station or based on characteristics of such channels or of access points transmitting on such channels.

US 2004/090929 relates to identifying a plurality of communication channels at a wireless device and classifying each of the communication channels into one of a plurality of groups. The method also includes scanning the communication channels in the groups. The communication channels in at least one of the groups are scanned at a different frequency than the communication channels in at least one other of the groups. In addition, the method includes updating one or more of the groups based on the scans.

US 2006142004 describes a method which involves determining whether a wireless connection between a first access point and a wireless station has failed. If so, a partial scanning process is conducted only on a subset of communication channels over which data is transmitted by access points neighboring the first access point. The subset of communication channels, inclusive of zero, is determined by analysis of a scanning history database.

### SUMMARY

A mobile WLAN client device periodically scans for wireless networks automatically so that it can maintain network connectivity. Whether connected or disconnected to a WLAN, the client device scans for neighboring APs so that it can initiate or maintain a connection to a data network. The more channels that are scanned, the longer the scanning process takes. This process may reduce the battery life of the client device. There is a tradeoff between scanning for WLANs and battery life.

Typically, a client device will scan for WLANs using a scanning scheme in which channels are scanned in increasing numerical order. If no results are found, the client device may wait for a period of time, and then resume scanning the channels in increasing numerical order. The period of time that the client device waits may increase in duration between scan sessions in which no results are found; subject to an upper limit. The client device may enter a lower power state during all or part of the period of time between scan sessions. The channels to be scanned may be all possible channels for a particular frequency band such as the 2.4 GHz band or the 5 GHz band, or may be limited to those channels of the frequency band which are valid in a particular regulatory domain, or may be any other subset of channels. For example, a client device scanning according to this scanning scheme for all possible channels in the 2.4 GHz band will scan first on channel 1, then on channel 2, then on channel 3, and so on. In another example, a client device scanning according to this scanning scheme for channels of the 2.4 GHz band that are permitted in Israel will scan first on channel 3, then on channel 4, then on channel 5, and so on.

However, the likelihood of detecting a WLAN is not the same on all channels. Many WLANs are deployed with only a single AP, and the channel which the AP uses to handle the WLAN is often unchanged from the default factory setting. Even if a WLAN is deployed using more than one AP, the channel settings of the APs may be selected so that neighboring APs use non-overlapping channels. When an AP is configured to operate on a certain channel to handle the WLAN, the AP is said to be "deployed" on that channel.

The inventors have realized that having the client device scan for WLANs using a scanning scheme that takes into account the relative prevalence, in a population of access points, of access point deployment on channels, may result in faster detection of networks or in less power consumption or in both than using the scanning scheme in which channels are scanned in increasing numerical order.

The population of access points which the scanning scheme takes into account may be the general population worldwide. For example, current statistics for the 2.4 GHz band indicate that the prevalence in APs worldwide of access point deployment on channels yields the following order, from channels on which the most APs are deployed to channels on which fewest APs are deployed: 6, 1, 11, 9, 13, 5, 2, 3, 4, 7, 8, 10, 12 and 14.

Alternatively, the population of access points which the scanning scheme takes into account may be the general population in a single regulatory domain, the general population in a particular market or the general population in a single country. For example, current statistics for the 2.4 GHz band indicate that the most prevalent deployment in North America is on channel 6, the second most prevalent deployment in North America is on channel 1, and the third most prevalent deployment in North America is on channel 11. This is not surprising, since the only set of non-overlapping channels in the 2.4 GHz band in use in North America is the set of channels 1, 6 and 11. In another example, current statistics for the 2.4 GHz band indicate that the six most prevalent deployments in Europe are on channels 5, 1, 9, 13, 6, and 11. In yet another example, current statistics for the 2.4 GHz band indicate that the least prevalent deployment in Japan is on channel 14, due to special rules for use of this channel.

A client device that is intended to be operable in more than one regulatory domain, or in more than one market, or in more than one country, may therefore be configured to use different scanning schemes in different regulatory domains, markets or countries. If the client device has determined the regulatory domain or market or country in which it is currently located, it will use a scanning scheme that is specific to that regulatory domain or market or country. When not in a regulatory domain or market or country for which it has a specific scanning scheme, such a client device may revert to a scanning scheme that takes into account the general worldwide population of access points. There are many different ways for the client device to determine the regulatory domain or market or country in which it is currently located, and discussion of these different ways-is beyond the scope of this document. However, some WLAN controllers lose their regulatory domain-dependent configurations when out of coverage. To compensate for this, the client device may store in its memory an indication of the regulatory domain in which it was last located, so as to modify or bias the worldwide scan to favor that regulatory domain. This is with an understanding that the probability of the client device being in the same regulatory domain is greater than the probability of the client device having moved far enough in either space or time so as not to be in the same regulatory domain. Until the client device is able to determine that it is in a different regulatory domain, the client device may use a modified world scanning scheme that is biased to favor the regulatory domain specified by the stored indication, that is, the regulatory domain in which it was last located.

As a further alternative, the population of access points which the scanning scheme takes into account may be a population of access points that the client device has previously detected. The client device may maintain statistics of channels on which it has detected wireless local area networks and determine the relative prevalence of channels from the statistics it maintains. For example, the statistics for a particular client device may indicate that the most prevalent deployment is on channel 5, the second most prevalent deployment is on channel 6, and the third most prevalent deployment is on channel 1.

As yet another alternative, the population of access points which the scanning scheme takes into account may be any combination of one or more of the populations described hereinabove. Other populations of access points are also contemplated.

How a scanning scheme takes into account the relative prevalence, in a population of access points, of access point deployment on channels, will now be described. In one aspect, the scanning scheme may involve scanning for one or more channels on which more access points in the population are deployed **prior to** scanning for one or more channels on which fewer access points in the population are deployed. In another aspect, the scanning scheme may involve scanning for one or more channels on which more access points in the population are deployed **more often than** scanning for one or more channels on which fewer access points in the population are deployed. Some scanning schemes may involve scanning for one or more channels on which more access points in the population are deployed **prior to and more often than** scanning for one or more channels on which fewer access points in the population are deployed. The invention is carried out according to independent claims 1, 4, 11, and 12.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

Figures 1 - 5 are flowcharts of exemplary scanning schemes; and

Figure 6 is a block diagram of an exemplary client device.

It will be appreciated that for simplicity and clarity of illustration, elements shown in the figures have not necessarily been drawn to scale. For example, the dimensions of some of the elements may be exaggerated relative to other elements for clarity.

### DETAILED DESCRIPTION

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

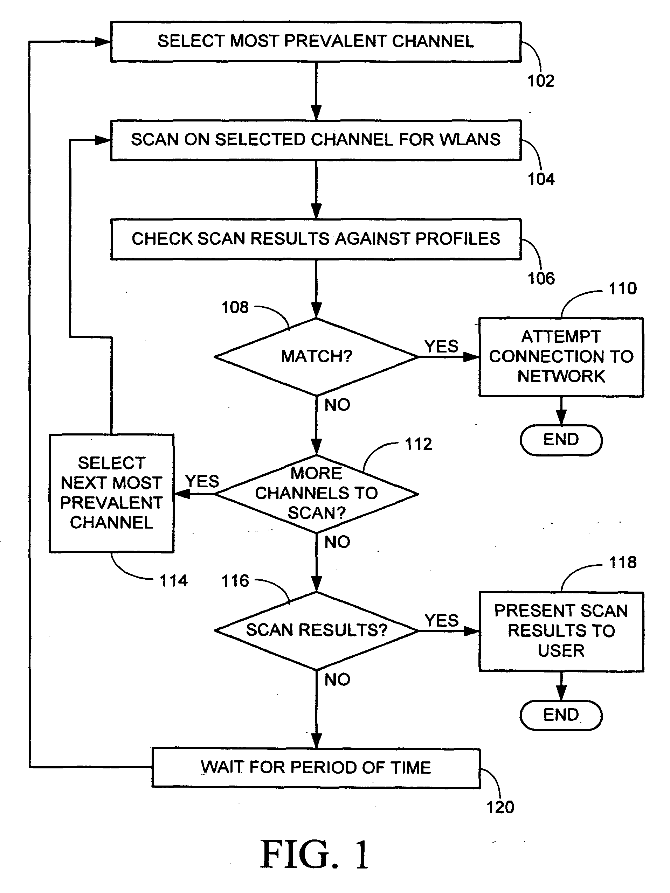

Figure 1 is a flowchart of an exemplary scanning scheme able to be implemented in a WLAN client device. In this exemplary scanning scheme, the WLAN client device scans for wireless local area networks according to a channel order in which channels are ordered by the decreasing relative prevalence, in a population of access points, of access point deployment on those channels. This is a specific case of scanning for one or more channels on which more access points in the population are deployed prior to scanning for one or more channels on which fewer access points in the population are deployed. An example of a channel order for scanning with this scanning scheme in the 2.4 GHz band when the population is the general worldwide population or the Japanese market is the order 6, 1, 11, 9, 13, 5, 2, 3, 4, 7, 8, 10, 12, 14. An example of a channel order for scanning with this scanning scheme in the 2.4 GHz band when the population is the North American market is the order 6, 1, 11, 3, 5, 8, 2, 7, 9, 4, 10. An example of a channel order for scanning with this scanning scheme in the 2.4 GHz band when the population is the European market is the order 5, 1, 9, 13, 6, 11, 3, 8, 2, 7, 4, 10, 12. In the event that the population is a general population worldwide, or a general population in a single regulatory domain, or a general population in a single market, or a general population in a single country, or any combination thereof, the channel order used by the scanning scheme may be hard-coded or programmable in the client device. In the event that client device determines the relative prevalence of channels from statistics it maintains of channels on which it has detected wireless local area networks, the client device will determine channel order dynamically.

At 102, the client device selects, from the set of channels to be scanned, the channel on which most of the access points in the population are deployed. For conciseness of description, this channel is referred to as the "most prevalent channel". At 104, the WLAN controller of the client device scans on the selected channel for wireless local area networks. The scanning may be passive or active or involve a combination of the two types. Any suitable scanning algorithm may be used at 104.

At 106, the client device checks the scan results against profiles, if any, that are stored by the client device. The profiles may be checked against the scan results in any suitable order. If there is a match, as checked at 108, then the client device attempts at 110 to connect to the wireless local area network that matches the profile. The attempt may involve initiating an authentication process and, if the authentication process is successful, initiating an association or re-association process with the AP the WLAN of which is identified in the matching scan results. The details of this are beyond the scope of this document.

If there is no match but there are additional channels to scan (checked at 112), the client device selects the next most prevalent channel of the set at 114 and the method proceeds to 104 to scan on the selected channel. The term "next most prevalent channel" is to be understood as the channel on which the next highest number of access points in the population are deployed.

If all suitable channels have been scanned without resulting in a matched profile, and there were indeed scan results (checked at 116), the client device may present the scan results to the user at 118. If there were no scan results (which will occur, for example, when the client device is out of coverage), then the client device may wait for a period of time at 120, and when this period of time has elapsed, the method may resume from 102. The period of time during which the client device waits may be fixed, or may vary from one scan session to another. For example, successive scan sessions may be separated by increasing periods of time, possibly subject to an upper limit. The client device may enter a lower power state during all or part of the period of time between scan sessions.

By scanning the communication channels in order according to their decreasing relative prevalence, networks, if present, may be detected faster and/or with less power consumption than with a standard scanning scheme in which channels are scanned in increasing numerical order. If all suitable channels are scanned and there are no scan results, the scanning scheme of Figure 1 may take the same amount of time as the scanning scheme in which channels are scanned in increasing numerical order.

Groups of Channels

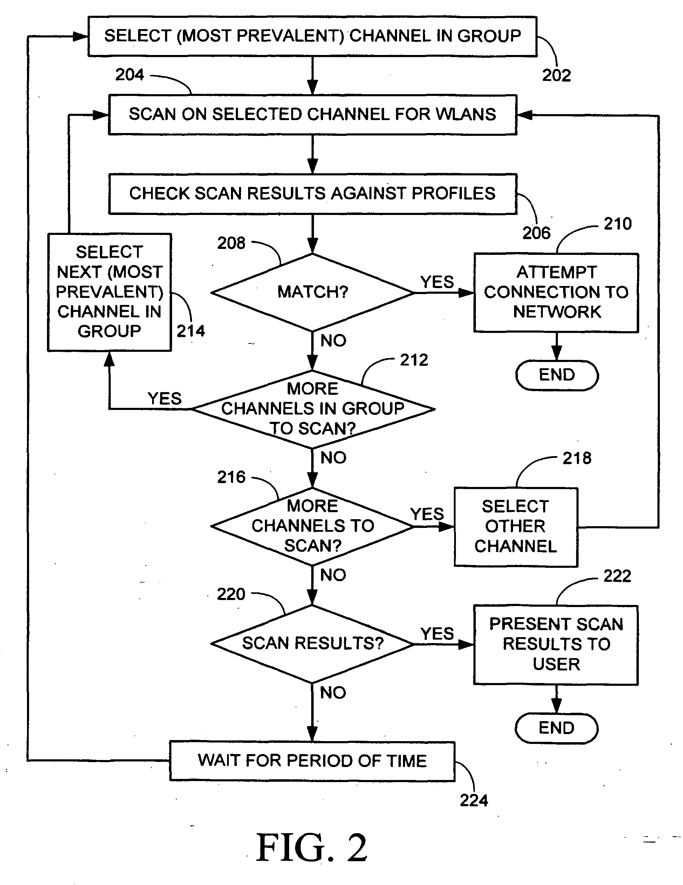

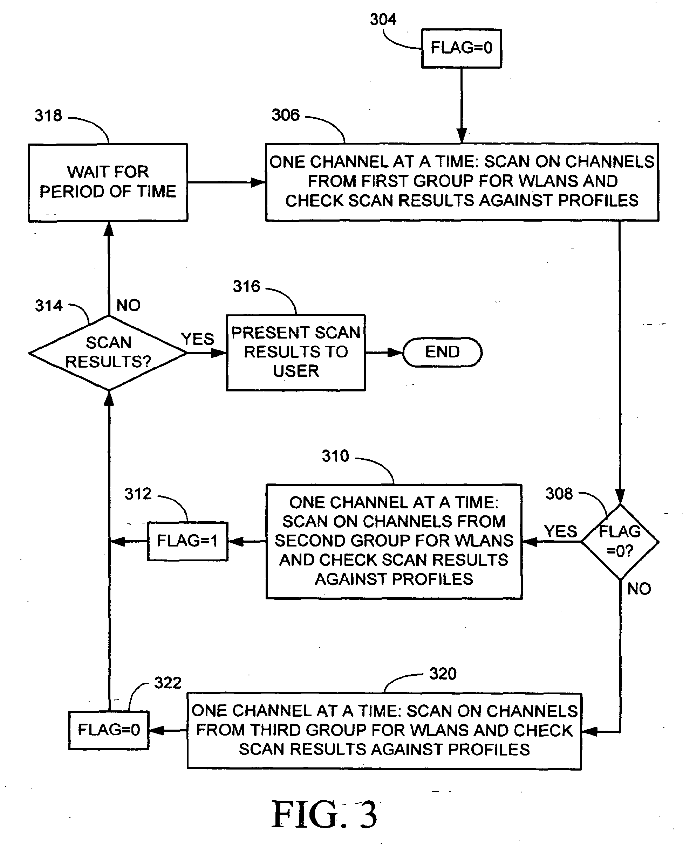

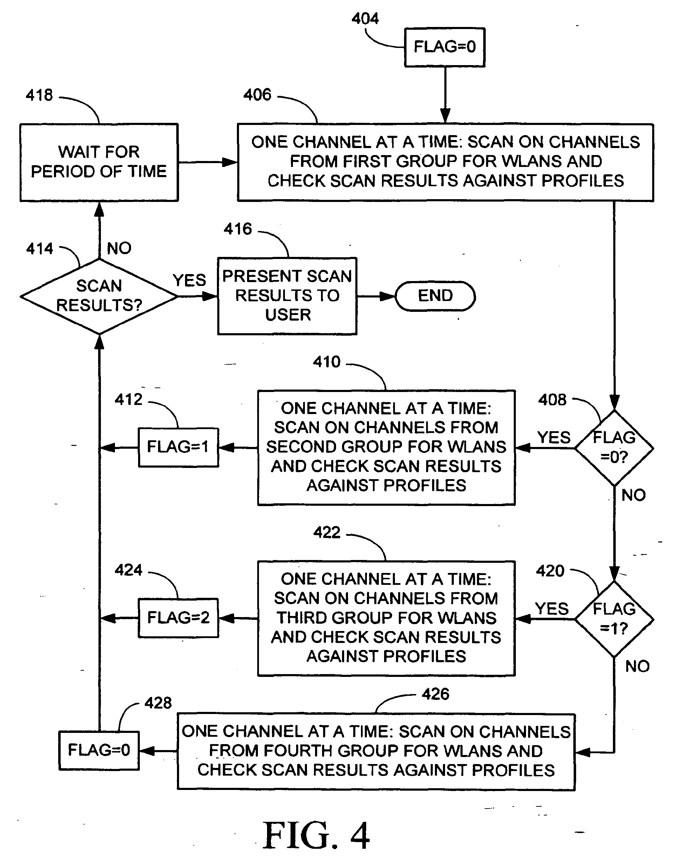

In some exemplary scanning schemes, one or more channels on which more access points in the population are deployed are grouped together, and the remaining channels (on which fewer access points in the population are deployed) are treated differently than the channel(s) that are grouped togther. The exemplary scanning scheme described below with respect to Figure 2 involves a group of one or more channels on which more access points in the population are deployed. The exemplary scanning schemes described below with respect to Figures 3, 4 and 5 involve a first group of one or more channels on which more access points in the population are deployed and *N* other groups formed from the remaining channels, on which fewer access points in the population are deployed, where *N* is a whole number greater than or equal to two. In the case of Figure 3, *N* is two. In the case of Figure 4, *N* is three. The partition of the remaining channels into *N* groups may be done arbitrarily or based on the probability of finding deployed access points on specific channels.

For example, if the channels to be scanned are in the 2.4 GHz band and the population is based on access points in North America, the group of channels on which more access points in the population are deployed may consist of channels 6, 1, and 11. If *N* is two, the second group may consist of channels 2, 4, 7 and 9, and the third group may consist of channels 3, 5, 8 and 10. If *N* is three, the second group may consist of channels 3, 5 and 8, the third group may consist of channels 2, 7 and 9, and the fourth group may consist of channels 4 and 10.

In another example, if the channels to be scanned are in the 2.4 GHz band and the population is based on access points in Europe, the group of channels on which more access points in the population are deployed may consist of channels 5, 1, 9, 13, 6 and 11.

In yet another example, if the channels to be scanned in the 5 GHz band are in the multiple sub-bands used by access points in North America, the group of channels on which more access points in the population are deployed may consist of channels 36, 48, 149, 161, 52, 64, 40, 44, 153, 157, 56, 60 and 165 or a subset thereof. If *N* is two, the group of more prevalent channels may consist of channels 36, 48, 149, 161, 52 and 64, the second group may consist of channels 40, 44, 153 and 157, and the third group may consist of channels 56, 60 and 165.

In a further example, if the channels to be scanned in the 5 GHz band are across multiple sub-bands used by access points in Europe, the group of channels on which more access points in the population are deployed may consist of channels 36, 48, 52, 64, 40, 44, 56, 60, 100, 140, 104, 136, 108, 132, 112, 116, 120, 124 and 128 or a subset thereof.

In yet another example, if the channels to be scanned in the 5 GHz band are across multiple sub-bands used by access points in Asia, the group of channels on which more access points in the population are deployed may consist of channels 36, 34, 48, 46, 40, 38, 44, 42, 52 and 64.

In the event that the population is a general population worldwide, or a general population in a single regulatory domain, or a general population in a single market, or a general population in a single country, or any combination thereof, the groups may be hard-coded or programmable in the client-device. In the event that the client device determines the relative prevalence of access point deployment on channels from statistics it maintains of channels on which it has detected wireless local area networks, the client device may modify or determine the groups dynamically.

Figure 2 is a flowchart of another exemplary scanning scheme able to be implemented in a WLAN client device. In this exemplary scanning scheme, the WLAN client device scans the one or more channels on which more access points in the population are deployed prior to scanning the remaining channels (on which fewer access points in the population are deployed) in the complete set of channels to be scanned.

At 202, the client device selects a channel from the group of one or more channels on which more access points in the population are deployed. The channel that is selected initially at 202 may be the most prevalent channel in the group. Alternatively, all channels belonging to the group may be treated similarly, in which case, any channel belonging to the group may be selected at 202 as long as it has not been previously selected during the particular scan session.

At 204, the WLAN controller of the client device scans on the selected channel for wireless local area networks. The scanning may be passive or active or involve a combination of the two types. Any suitable scanning algorithm may be used at 204.

At 206, the client device checks the scan results against profiles, if any, that are stored by the client device. The profiles may be checked against the scan results in any suitable order. If there is a match, as checked at 208, then the client device attempts at 210 to connect to the wireless local area network that matches the profile. The attempt may involve initiating an authentication process and, if the authentication process is successful, initiating an association or re-association process with the AP the WLAN of which is identified in the matching scan results.

If there is no match but there are additional channels to scan in the group of channels on which more access points in the population are deployed (checked at 212), the client device selects the next channel of the group at 214 and the method proceeds to 204 to scan on the selected channel. The channel that is selected at 214 may be the next most prevalent channel in the group. Alternatively, all channels belonging to the group may be treated similarly, in which case, any channel belonging to the group may be selected at 214 as long as it has not been previously selected during the particular scan session.

If all channels in the group have been scanned without resulting in a matched profile, and there are more channels in the complete set to be scanned (checked at 216), the client device selects one of the other channels at 218 and the method proceeds to 204 to scan on the selected channel. The order in which the other channels are selected may be according to the decreasing relative prevalence, in the population, of access point deployment on those other channels, but this is not necessary.

If all suitable channels have been scanned and there were indeed scan results (checked at 220), the client device may present the scan results to the user at 222. If there were no scan results (which will occur, for example, when the client device is out of coverage), then the client device may wait for a period of time at 224, and when this period of time has elapsed, the method may resume from 202. The period of time during which the client device waits may be fixed, or may vary from one scan session to another. For example, successive scan sessions may be separated by increasing periods of time, possibly subject to an upper limit. The client device may enter a lower power state during all or part of the period of time between scan sessions.

By scanning the communication channels on which more access points in the population are deployed prior to scanning the communication channels on which fewer access points in the population are deployed, networks, if present, may be detected faster and/or with less power consumption than with a standard scanning scheme in which channels are scanned in increasing numerical order. If all suitable channels are scanned and there are no scan results, the scanning scheme of Figure 2 may take the same amount of time as the scanning scheme in which channels are scanned in increasing numerical order.

Figure 3 is a flowchart of an exemplary scanning scheme able to be implemented in a WLAN client device. In this exemplary scanning scheme, the WLAN client device scans each scan session one or more channels on which more access points in the population are deployed, while the WLAN client device scans every other scan session channels on which fewer access points in the population are deployed. If there are no scan results, this exemplary scanning scheme may take less time than the scanning scheme in which channels are scanned in increasing numerical order, but not all suitable channels will be scanned in each scan session. If a wireless local area network to be detected is on a channel on which fewer access points in the population are deployed, more time may be required to detect the network with this exemplary scanning scheme than with the scanning scheme in which channels are scanned in increasing numerical order. However, if there are no scan results, this exemplary scanning scheme may result in lower power consumption for the client device than with the scanning scheme in which channels are scanned in increasing numerical order, since less time is spent scanning.

At 304, a flag is set to zero. At 306, one channel at a time, the WLAN controller of the client device scans for wireless local area networks on the channels from the ***first*** group and checks the scan results against profiles, if any, that are stored in the client device. The scanning may be passive or active or involve a combination of the two types. The order in which the channels in the first group are scanned may be according to the decreasing relative prevalence, in the population, of access point deployment on the channels in the first group, or may be any other order. Any suitable scanning algorithm may be used at 306. The profiles may be checked against the scan results in any suitable order. If there is a match, then the scanning scheme will end, and the client device will attempt to connect to the wireless local area network that matches the profile.

If all of the channels in the first group have been scanned without a profile match, the method proceeds to 308, where the client device checks the value of the flag. If the flag is zero, then at 310, one channel at a time, the WLAN controller of the client device scans for wireless local area networks on the channels from the ***second*** group and checks the scan results against profiles, if any, that are stored in the client device. The scanning may be passive or active or involve a combination of the two types. The order in which the channels in the second group are scanned may be according to the decreasing relative prevalence, in the population, of access point deployment on the channels in the second group, or may be any other order. Any suitable scanning algorithm may be used at 310. The profiles may be checked against the scan results in any suitable order. If there is a match, then the scanning scheme will end, and the client device will attempt to connect to the wireless local area - network that matches the profile. If all of the channels in the second group have been scanned without a profile match, the flag is set to one at 312, and the method proceeds to 314.

If there were indeed scan results (checked at 314), the client device may present the scan results to the user at 316. If there were no scan results (which will occur, for example, when the client device is out of coverage), then the client device may wait for a period of time at 318, and when this period of time has elapsed, the method may resume from 306. The period of time during which the client device waits may be fixed, or may vary from one scan session to another. For example, successive scan sessions may be separated by increasing periods of time, possibly subject to an upper limit. The client device may enter a lower power state during all or part of the period of time between scan sessions.

If at 308 the flag is one, then the method proceeds to 320. At 320, one channel at a time, the WLAN controller of the client device scans for wireless local area networks on the channels from the ***third*** group and checks the scan results against profiles, if any, that are stored in the client device. The scanning may be passive or active or involve a combination of the two types. The order in which the channels in the third group are scanned may be according to the decreasing relative prevalence, in the population, of access point deployment on the channels in the third group, or may be any other order. Any suitable scanning algorithm may be used at 320. The profiles may be checked against the scan results in any suitable order. If there is a match, then the scanning scheme will end, and the client device will attempt to connect to the wireless local area network that matches the profile. If all of the channels in the third group have been scanned without a profile match, the flag is set to zero at 322, and the method proceeds to 314, where it is checked whether there are indeed scan results.

Figure 4 is a flowchart of an exemplary scanning scheme able to be implemented in a WLAN client device. In this exemplary scanning scheme, the WLAN client device scans each scan session one or more channels on which more access points in the population are deployed, while the WLAN client device scans every third scan session channels on which fewer access points in the population are deployed. If there are no scan results, this exemplary scanning scheme may take less time than the scanning scheme in which channels are scanned in increasing numerical order, but not all suitable channels will be scanned in each scan session. If a wireless local area network to be detected is on a channel on which fewer access points in the population are deployed, more time may be required to detect the network with this exemplary scanning scheme than with the scanning scheme in which channels are scanned in increasing numerical order. However, if there are no scan results, this exemplary scanning scheme may result in lower power consumption for the client device than with the scanning scheme in which channels are scanned in increasing numerical order, since less time is spent scanning.

At 404, a flag is set to zero. At 406, one channel at a time, the WLAN controller of the client device scans for wireless local area networks on the channels from the ***first*** group and checks the scan results against profiles, if any, that are stored in the client device. The scanning may be passive or active or involve a combination of the two types. The order in which the channels in the first group are scanned may be according to the decreasing relative prevalence, in the population, of access point deployment on the channels in the first group, or may be any other order. Any suitable scanning algorithm may be used at 406. The profiles may be checked against the scan results in any suitable order. If there is a match, then the scanning scheme will end, and the client device will attempt to connect to the wireless local area network that matches the profile.

If all of the channels in the first group have been scanned without a profile match, the method proceeds to 408, where the client device checks the value of the flag. If the flag is zero, then at 410, one channel at a time, the WLAN controller of the client device scans for wireless local area networks on the channels from the ***second*** group and checks the scan results against profiles, if any, that are stored in the client device. The scanning may be passive or active or involve a combination of the two types. The order in which the channels in the second group are scanned may be according to the decreasing relative prevalence, in the population, of access point deployment on the channels in the second group, or may be any other order. Any suitable scanning algorithm may be used at 410. The profiles may be checked against the scan results in any suitable order. If there is a match, then the scanning scheme will end, and the client device will attempt to connect to the wireless local area network that matches the profile. If all of the channels in the second group have been scanned without a profile match, the flag is set to one at 412, and the method proceeds to 414.

If there were indeed scan results (checked at 414), the client device may present the scan results to the user at 416. If there were no scan results (which will occur, for example, when the client device is out of coverage), then the client device may wait for a period of time at 418, and when this period of time has elapsed, the method may resume from 406. The period of time during which the client device waits may be fixed, or may vary from one scan session to another. For example, successive scan sessions may be separated by increasing periods of time, possibly subject to an upper limit. The client device may enter a lower power state during all or part of the period of time between scan sessions.

If at 408 the flag is not zero, then the method proceeds to 420, where the client device checks the value of the flag. If the flag is one, then at 422, one channel at a time, the WLAN controller of the client device scans for wireless local area networks on the channels from the ***third*** group and checks the scan results against profiles, if any, that are stored in the client device. The scanning may be passive or active or involve a combination of the two types. The order in which the channels in the third group are scanned may be according to the decreasing relative prevalence, in the population, of access point deployment on the channels in the third group, or may be any other order. Any suitable scanning algorithm may be used at 422. The profiles may be checked against the scan results in any suitable order. If there is a match, then the scanning scheme will end; and the client device will attempt to connect to the wireless local area network that matches the profile. If all of the channels in the third group have been scanned without a profile match, the flag is set to two at 424, and the method proceeds to 414, where it is checked whether there are indeed scan results.

If at 420 the flag is not one, then the method proceeds to 426. At 426, one channel at a time, the WLAN controller of the client device scans for wireless local area networks on the channels from *the **fourth*** group and checks the scan results against profiles, if any, that are stored in the client device. The scanning may be passive or active or involve a combination of the two types. The order in which the channels in the fourth group are scanned may be according to the decreasing relative prevalence, in the population, of access point deployment on the channels in the fourth group, or may be any other order. Any suitable scanning algorithm may be used at 426. The profiles may be checked against the scan results in any suitable order. If there is a match, then the scanning scheme will end, and the client device will attempt to connect to the wireless local area network that matches the profile. If all of the channels in the fourth group have been scanned without a profile match, the flag is set to zero at 426, and the method proceeds to 414, where it is checked whether there are indeed scan results.

In general, the channels may be partitioned into a first group of one or more channels on which more access points in the population are deployed and N other groups of one or more channels on which fewer access points in the population are deployed, where N is a whole number greater than or equal to two. The channels in the first group may be scanned once per scan session, and the channels in one of the other groups may be scanned once per N scan sessions.

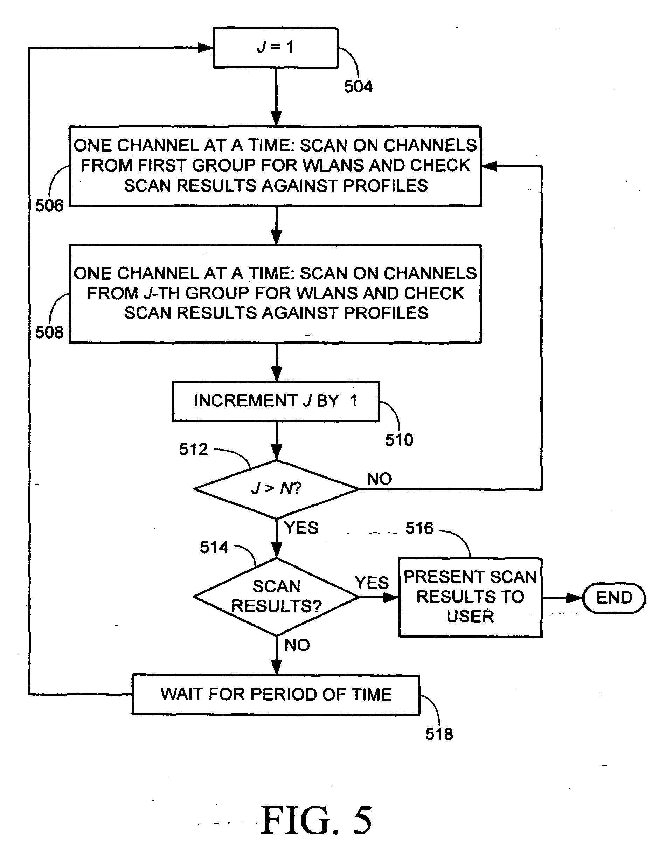

Figure 5 is a flowchart of an exemplary scanning scheme able to be implemented in a WLAN client device. In this exemplary scanning scheme, the WLAN client device scans more than once per scan session one or more channels on which more access points in the population are deployed, while the WLAN client device scans once per scan session channels on which fewer access points in the population are deployed. If a wireless local area network is on a channel on which more access points in the population are deployed, it may be detected faster using this exemplary scanning scheme than using a scanning scheme in which channels are scanned in increasing numerical order. However, if there are no scan results, this exemplary scanning scheme may take more time than the scanning scheme in which channels are scanned in increasing numerical order.

At 504, an index J is set to one. At 506, one channel at a time, the WLAN controller of the wireless client device scans for wireless local area networks on the channels from *the **first*** group and checks the scan results against profiles, if any, that are stored in the client device. The scanning may be passive or active or involve a combination of the two types. The order in which the channels in the first group are scanned may be according to the decreasing relative prevalence, in the population, of access point deployment on channels in the first group, or may be any other order. Any suitable scanning algorithm may be used at 506. The profiles may be checked against the scan results in any suitable order. If there is a match, then the scanning scheme will end, and the client device will attempt to connect to the wireless local area network that matches the profile.

If all of the channels in the first group have been scanned without a profile match, then at 508, one channel at a time, the WLAN controller of the wireless client device scans for wireless local area networks on the channels from the ***J-th*** group and checks the scan results against profiles, if any, that are stored in the client device. The scanning may be passive or active or involve a combination of the two types. The order in which the channels in the ***J-th*** group are scanned may be according to the decreasing relative prevalence, in the population, of access point deployment on channels in the ***J-th*** group, or may be any other order. Any suitable scanning algorithm may be used at 508. The profiles may be checked against the scan results in any suitable order. If there is a match, then the scanning scheme will end, and the client device will attempt to connect to the wireless local area network that matches the profile.

If all of the channels in the *J*-th group have been scanned without a profile match, then at 510, the index J is incremented by one. If J is less than or equal to N, which is checked at 512, then the method proceeds from 506. Otherwise, if there were indeed scan results (checked at 514), the client device may present the scan results to the user at 516. If there were no scan results (which will occur, for example, when the client device is out of coverage), then the client device may wait for a period of time at 518, and when this period of time has elapsed, the method may resume from 504. The period of time during which the client device waits may be fixed, or may vary from one scan session to another. For example, successive scan sessions may be separated by increasing periods of time, possibly subject to an upper limit. The client device may enter a lower power state during all or part of the period of time between scan sessions.

In this exemplary scanning scheme, the channels in the first group are scanned *N* times per scan session and the channels in the other groups are scanned once per scan session.

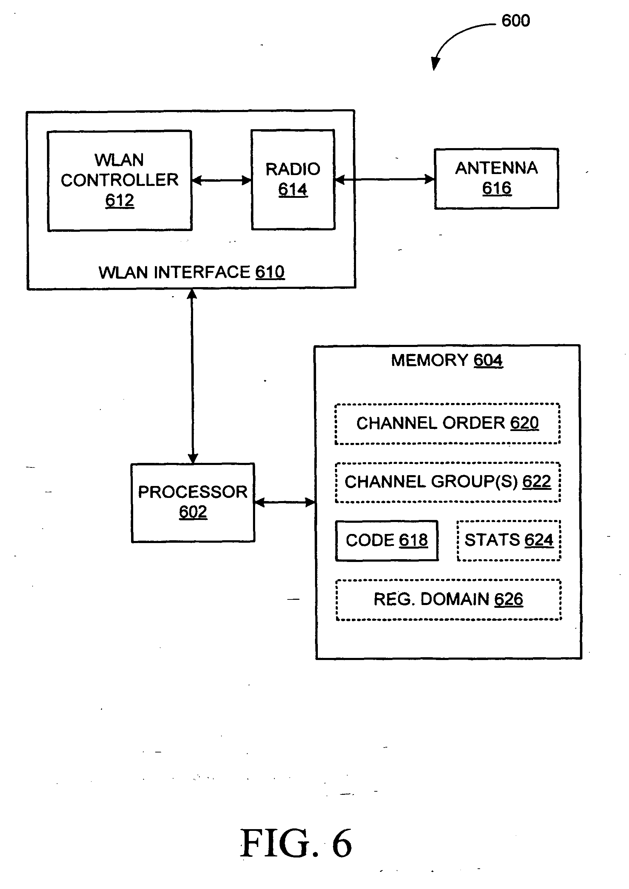

Figure 6 is a block diagram of an exemplary client device. A client device 600 comprises a processor 602, and a memory 604 coupled to processor 602.

Client device 600 comprises a WLAN interface 610, compatible with one or more WLAN standards, for example, one or more standards of the family of IEEE 802.11 wireless communication standards. WLAN interface 610 is coupled to processor 602 and includes at least a WLAN controller 612 and a radio 614. Client device 600 also comprises an antenna 616 coupled to radio 614. For example, client device 600 may be able to communicate with APs via WLAN interface 610 and antenna 616.

Memory 604 stores code 618 that, when executed by processor 602, may implement the methods described herein together with WLAN controller 612. Memory 604 may also store indications 620 of the order in which channels are to be scanned, or indications 622 of which channels belong to which groups, or both indications 620 and indications 622. For example, indications 622 may identify those channels on which more access points in a population are deployed and therefore belong to a first group and those channels on which fewer access points in the population are deployed and therefore belong to a second group, third group, fourth group, etc. If client device 600 maintains statistics of channels on which it has detected WLANs, the statistics may be stored in memory 604 in statistics 624. Memory 604 may also store an indication 626 of a last known regulatory domain in which client device 600 was located.

Client device 600 includes other components that, for clarity, are not shown in Figure 6. A non-exhaustive list of examples for client device 600 includes a wireless-enabled laptop computer, a wireless-enabled tablet computer, a wireless-enabled cellphone, a wireless-enabled personal digital assistant (PDA), a wireless-enabled smart phone, a wireless-enabled video camera/monitor, a wireless-enabled gaming/multimedia console, a wireless-enabled sensor/reporting/storage device, a wireless Internet Protocol (IP) phone and any other suitable WLAN client device.

## Claims

1. A method for a wireless local area network client device (600), the method comprising:
scanning for wireless local area networks according to a channel order in which channels are ordered by the decreasing relative prevalence of access point deployment on channels in a population of access points, such that the first channel in the channel order is a most prevalent channel on which most access points in the population are deployed, the second channel in the channel order is a next most prevalent channel on which the next highest number of access points in the population are deployed, and so on, wherein the channel order is hard-coded or programmable in the client device (600).

2. The method of claim 1, wherein the population is a general population of access points worldwide or in a single regulatory domain or in a single country.

3. The method of claim 2, further comprising:
where the population is a general population of access points in a single regulatory domain, determining that the client device (600) is in a different regulatory domain than the single regulatory domain, and consequently scanning for wireless local area networks according to a channel order in which channels are ordered by the decreasing relative prevalence of access point deployment on channels in a general population of access points in the different regulatory domain; or
where the population is a general population of access points in a single country, determining that the client device (600) is in a different country than the single country, and consequently scanning for wireless local area networks according to a channel order in which channels are ordered by the decreasing relative prevalence of access point deployment on channels in a general population of access points in the different country.

4. A method for a wireless local area network client device (600), the method comprising:
scanning for wireless local area networks on one or more channels belonging to a group of one or more channels on which more access points in a population of access points are deployed; and
scanning for local wireless area networks on one or more channels on which fewer access points in the population are deployed,
wherein the scanning on the one or more channels belonging to the group occurs more often than the scanning on the one or more channels on which fewer access points in the population are deployed, and
wherein the group is hard-coded or programmable in the client device (600).

5. The method of claim 4, wherein the scanning on the one or more channels belonging to the group comprises:
scanning more than once in a single scan session on the one or more channels belonging to the group.

6. The method of claim 4, wherein scanning on the one or more channels belonging to the group comprises scanning once per scan session on the one or more channels belonging to the group, wherein the one or more channels on which fewer access points in the population are deployed are partitioned into *N* other groups that are hard-coded or programmable in the client device (600), where *N* is a whole number greater than or equal to two, and wherein scanning on the one or more channels on which fewer access points in the population are deployed comprises scanning once per *N* scan sessions on channels in one of the other groups.

7. The method of claim 4, wherein scanning on the one or more channels on which fewer access points in the population are deployed comprises scanning once per scan session on the one or more channels on which fewer access points in the population are deployed, wherein the one or more channels on which fewer access points in the population are deployed are partitioned into *N* other groups that are hard-coded or programmable in the client device (600), where *N* is a whole number greater than or equal to two, and wherein scanning on the one or more channels belonging to the group comprises scanning *N* times per scan session on the one or more channels belonging to the group.

8. The method of any one of claims 4 to 7, wherein the population is a general population of access points worldwide or in a single regulatory domain or in a single country.

9. The method of claim 8, further comprising:
where the population is a general population of access points in a single regulatory domain, determining that the client device (600) is in a different regulatory domain than the single regulatory domain, and consequently scanning for wireless local area networks using a scanning scheme that takes into account the relative prevalence of access point deployment on channels in a general population of access points in the different regulatory domain; or
where the population is a general population of access points in a single country, determining that the client device (600) is in a different country than the single country, and consequently scanning for wireless local area networks using a scanning scheme that takes into account the relative prevalence of access point deployment on channels in a general population of access points in the different country.

10. The method of claim 1 or any one of claims 4 to 7, wherein the population consists of access points that the client device (600) has previously detected.

11. A client device (600) comprising:
a processor (602);
a wireless local area network interface (610) coupled to the processor (602), the wireless local area network interface (610) comprising a wireless local area network controller (612) and a radio (614);
an antenna (616) coupled to the radio (614);
a memory (604) coupled to the processor (602), the memory (604) arranged to store executable code means (618) that, when executed by the processor (602), control the wireless local area network controller (612) to perform the method as claimed in any one of claims 1 to 3,
wherein the memory (604) is arranged to store indications of the channel order.

12. A client device (600) comprising:
a processor (602);
a wireless local area network interface (610) coupled to the processor (602), the wireless local area network interface (610) comprising a wireless local area network controller (612) and a radio (614);
an antenna (616) coupled to the radio (614); and
a memory (604) coupled to the processor (602), the memory (604) arranged to store executable code means (618) that, when executed by the processor (602), control the wireless local area network controller (612) to scan for wireless local area networks using a scanning scheme that is to scan on channels belonging to a group of one or more channels on which more access points in a population of access points are deployed and to scan on one or more channels on which fewer access points in the population are deployed,
wherein scanning on channels belonging to the group of one or more channels on which more access points in the population of access points are deployed occurs more often than scanning on the one or more channels on which fewer access points in the population of access points are deployed; and
wherein the memory (604) is arranged to store indications of which channels belong to the group.

13. The client device (600) of claim 12, wherein the population is a general population of access points worldwide or in a single regulatory domain or in a single country.

14. The client device (600) of claim 12, wherein the population consists of access points that the client device (600) has previously detected.

## Patentansprüche

1. Ein Verfahren für eine "drahtloses lokales Netzwerk"-Client-Vorrichtung (600), wobei das Verfahren aufweist:
Abtasten hinsichtlich drahtloser lokaler Netzwerke gemäß einer Kanalreihenfolge, in der Kanäle durch die abnehmende relative Prävalenz eines Zugangspunkteinsatzes auf Kanälen in einer Population von Zugangspunkten geordnet sind derart, dass der erste Kanal in der Kanalreihenfolge ein prävalentester Kanal ist, auf dem die meisten Zugangspunkte in der Population eingesetzt sind, der zweite Kanal in der Kanalreihenfolge ein nächst-prävalenter Kanal ist, auf dem die nächsthöchste Anzahl von Zugangspunkten in der Population eingesetzt ist, und so weiter, wobei die Kanalreihenfolge in die Client-Vorrichtung (600) fest codiert oder programmierbar ist.

2. Das Verfahren gemäß Anspruch 1, wobei die Population eine allgemeine Population von Zugangspunkten weltweit oder in einer einzelnen regulatorischen Domäne oder in einem einzelnen Land ist.

3. Das Verfahren gemäß Anspruch 2, das weiter aufweist:
wenn die Population eine allgemeine Population von Zugangspunkten in einer einzelnen regulatorischen Domäne ist, Bestimmen, dass die Client-Vorrichtung (600) in einer anderen regulatorischen Domäne als die einzelne regulatorische Domäne ist, und infolgedessen Abtasten hinsichtlich drahtloser lokaler Netzwerke gemäß einer Kanalreihenfolge, in der Kanäle geordnet sind durch die abnehmende relative Prävalenz eines Zugangspunkteinsatzes auf Kanälen in einer allgemeinen Population von Zugangspunkten in der anderen regulatorischen Domäne; oder
wenn die Population eine allgemeine Population von Zugangspunkten in einem einzelnen Land ist, Bestimmen, dass die Client-Vorrichtung (600) in einem anderen Land als das einzelne Land ist, und infolgedessen Abtasten hinsichtlich drahtloser lokaler Netzwerke gemäß einer Kanalreihenfolge, in der Kanäle geordnet sind durch die abnehmende relative Prävalenz eines Zugangspunkteinsatzes auf Kanälen in einer allgemeinen Population von Zugangspunkten in dem anderen Land.

4. Ein Verfahren für eine "drahtloses lokales Netzwerk"-Client-Vorrichtung (600), wobei das Verfahren aufweist:
Abtasten hinsichtlich drahtloser lokaler Netzwerke auf einem Kanal oder mehreren Kanälen, der/die zu einer Gruppe von einem Kanal oder mehreren Kanälen gehört/gehören, auf dem/denen mehr Zugangspunkte in einer Population von Zugangspunkten eingesetzt sind; und
Abtasten hinsichtlich drahtloser lokaler Netzwerke auf einem Kanal oder mehreren Kanälen, auf dem/denen weniger Zugangspunkte in der Population eingesetzt sind,
wobei das Abtasten auf dem einen Kanal oder den mehreren Kanälen, der/die zu der Gruppe gehört/gehören, öfters stattfindet als das Abtasten auf dem einen Kanal oder den mehreren Kanälen, auf dem/denen weniger Zugangspunkte in der Population eingesetzt sind, und
wobei die Gruppe in die Client-Vorrichtung (600) fest codiert oder programmierbar ist.

5. Das Verfahren gemäß Anspruch 4, wobei das Abtasten auf dem einen Kanal oder den mehreren Kanälen, der/die zu der Gruppe gehört/gehören, aufweist:
mehr als einmal Abtasten in einer einzelnen Abtastsitzung auf dem einen Kanal oder den mehreren Kanälen, der/die zu der Gruppe gehört/gehören.

6. Das Verfahren gemäß Anspruch 4, wobei das Abtasten auf dem einen Kanal oder den mehreren Kanälen, der/die zu der Gruppe gehört/gehören, aufweist ein Abtasten einmal pro Abtastsitzung auf dem einen Kanal oder den mehreren Kanälen, der/die zu der Gruppe gehört/gehören, wobei der eine Kanal oder die mehreren Kanälen, auf dem/denen weniger Zugangspunkte in der Population eingesetzt sind, in *N* andere Gruppen aufgeteilt ist/sind, die in die Client-Vorrichtung (600) fest codiert oder programmierbar sind, wobei *N* eine Ganzzahl größer oder gleich zwei ist, und wobei das Abtasten auf dem einen Kanal oder den mehreren Kanälen, auf dem/denen weniger Zugangspunkte in der Population eingesetzt sind, ein Abtasten einmal pro *N* Abtastsitzungen auf Kanälen in einer der anderen Gruppen aufweist.

7. Das Verfahren gemäß Anspruch 4, wobei das Abtasten auf dem einen Kanal oder den mehreren Kanälen, auf dem/denen weniger Zugangspunkte in der Population eingesetzt sind, aufweist ein Abtasten einmal pro Abtastsitzung auf dem einen Kanal oder den mehreren Kanälen, auf dem/denen weniger Zugangspunkte in der Population eingesetzt sind, wobei der eine Kanal oder die mehreren Kanäle, auf dem/denen weniger Zugangspunkte in der Population eingesetzt sind, in *N* andere Gruppen aufgeteilt ist/sind, die in die Client-Vorrichtung (600) fest codiert oder programmierbar sind, wobei *N* eine Ganzzahl größer oder gleich zwei ist, und wobei das Abtasten auf dem einen Kanal oder den mehreren Kanälen, der/die zu der Gruppe gehört/gehören, ein Abtasten von *N*-mal pro Abtastsitzung auf dem einen Kanal oder den mehreren Kanälen aufweist, der/die zu der Gruppe gehört/gehören.

8. Das Verfahren gemäß einem der Ansprüche 4 bis 7, wobei die Population eine allgemeine Population von Zugangspunkten weltweit oder in einer einzelnen regulatorischen Domäne oder in einem einzelnen Land ist.

9. Das Verfahren gemäß Anspruch 8, das weiter aufweist:
wenn die Population eine allgemeine Population von Zugangspunkten in einer einzelnen regulatorischen Domäne ist, Bestimmen, dass die Client-Vorrichtung (600) in einer anderen regulatorischen Domäne als die einzelne regulatorische Domäne ist, und infolgedessen Abtasten hinsichtlich drahtloser lokaler Netzwerke unter Verwendung eines Abtastschemas, das die relative Prävalenz eines Zugangspunkteinsatzes auf Kanälen in einer allgemeinen Population von Zugangspunkten in der anderen regulatorischen Domäne berücksichtigt; oder
wenn die Population eine allgemeine Population von Zugangspunkten in einem einzelnen Land ist, Bestimmen, dass die Client-Vorrichtung (600) in einem anderen Land als das einzelne Land ist, und infolgedessen Abtasten hinsichtlich drahtloser lokaler Netzwerke unter Verwendung eines Abtastschemas, das die relative Prävalenz eines Zugangspunkteinsatzes auf Kanälen in einer allgemeinen Population von Zugangspunkten in dem anderen Land berücksichtigt.

10. Das Verfahren gemäß Anspruch 1 oder einem der Ansprüche 4 bis 7, wobei die Population aus Zugangspunkten besteht, die die Client-Vorrichtung (600) zuvor erfasst hat.

11. Eine Client-Vorrichtung (600), die aufweist:
einen Prozessor (602);
eine "drahtloses lokales Netzwerk"-Schnittstelle (610), die mit dem Prozessor (602) gekoppelt ist, wobei die "drahtloses lokales Netzwerk"-Schnittstelle (610) eine "drahtloses lokales Netzwerk"-Steuervorrichtung (612) und eine Funkvorrichtung (614) aufweist;
eine Antenne (616), die mit der Funkvorrichtung (614) gekoppelt ist;
einen Speicher (604), der mit dem Prozessor (602) gekoppelt ist, wobei der Speicher (604) ausgebildet ist zum Speichern von "ausführbarer Code"-Mitteln (618), die bei Ausführung durch den Prozessor (602) die "drahtloses lokales Netzwerk"-Steuervorrichtung (612) steuern, um das Verfahren gemäß einem der Ansprüche 1 bis 3 auszuführen,
wobei der Speicher (604) ausgebildet ist zum Speichern von Angaben der Kanalreihenfolge.

12. Eine Client-Vorrichtung (600), die aufweist:
einen Prozessor (602);
eine "drahtloses lokales Netzwerk"-Schnittstelle (610), die mit dem Prozessor (602) gekoppelt ist, wobei die "drahtloses lokales Netzwerk"-Schnittstelle (610) eine "drahtloses lokales Netzwerk"-Steuervorrichtung (612) und eine Funkvorrichtung (614) aufweist;
eine Antenne (616), die mit der Funkvorrichtung (614) gekoppelt ist; und
einen Speicher (604), der mit dem Prozessor (602) gekoppelt ist, wobei der Speicher (604) ausgebildet ist zum Speichern von "ausführbarer Code"-Mitteln (618), die bei Ausführung durch den Prozessor (602) die "drahtloses lokales Netzwerk"-Steuervorrichtung (612) steuern, hinsichtlich drahtloser lokaler Netzwerke unter Verwendung eines Abtastschemas abzutasten, das auf Kanälen abtasten soll, die zu einer Gruppe von einem Kanal oder mehreren Kanälen gehören, auf dem/denen mehr Zugangspunkte in einer Population von Zugangspunkten eingesetzt sind, und das auf einem Kanal oder mehreren Kanälen abtasten soll, auf dem/denen weniger Zugangspunkte in der Population eingesetzt sind,
wobei das Abtasten auf Kanälen, die zu der Gruppe von einem Kanal oder mehreren Kanälen gehören, auf dem/denen mehr Zugangspunkte in der Population von Zugangspunkten eingesetzt sind, öfters stattfindet als das Abtasten auf dem einen Kanal oder den mehreren Kanälen, auf dem/denen weniger Zugangspunkte in der Population von Zugangspunkten eingesetzt sind; und
wobei der Speicher (604) ausgebildet ist zum Speichern von Angaben, welche Kanäle zu der Gruppe gehören.

13. Die Client-Vorrichtung (600) gemäß Anspruch 12, wobei die Population eine allgemeine Population von Zugangspunkten weltweit oder in einer einzelnen regulatorischen Domäne oder in einem einzelnen Land ist.

14. Die Client-Vorrichtung (600) gemäß Anspruch 12, wobei die Population aus Zugangspunkten besteht, die die Client-Vorrichtung (600) zuvor erfasst hat.

## Revendications

1. Procédé pour un dispositif client de réseau local sans fil (600), le procédé comprenant le fait :
de balayer pour des réseaux locaux sans fil selon un ordre de canaux dans lequel des canaux sont classés par prévalence relative décroissante de déploiement de points d'accès sur des canaux dans une population de points d'accès, de sorte que le premier canal dans l'ordre des canaux soit le canal le plus prévalent sur lequel la plupart des points d'accès dans la population sont déployés, que le deuxième canal dans l'ordre des canaux soit le canal le plus prévalent suivant sur lequel le plus grand nombre suivant de points d'accès dans la population sont déployés, et ainsi de suite, où l'ordre des canaux est codé en dur ou peut être programmé dans le dispositif client (600).

2. Procédé de la revendication 1, dans lequel la population est une population globale de points d'accès dans le monde entier ou dans un domaine de réglementation unique ou dans un pays unique.

3. Procédé de la revendication 2, comprenant en outre le fait :
de déterminer, là où la population est une population globale de points d'accès dans un domaine de régulation unique, que le dispositif client (600) se trouve dans un domaine de régulation différent du domaine de régulation unique, et par conséquent de balayer pour des réseaux locaux sans fil selon un ordre des canaux dans lequel des canaux sont classés par prévalence relative décroissante de déploiement de points d'accès sur des canaux dans une population globale de points d'accès dans le domaine de régulation différent ; ou
de déterminer, là où la population est une population globale de points d'accès dans un pays unique, que le dispositif client (600) se trouve dans un pays différent du pays unique, et par conséquent de balayer pour des réseaux locaux sans fil selon un ordre des canaux dans lequel des canaux sont classés par prévalence relative décroissante de déploiement de points d'accès sur des canaux dans une population globale de points d'accès dans le pays différent.

4. Procédé pour un dispositif client de réseau local sans fil (600), le procédé comprenant le fait :
de balayer pour des réseaux locaux sans fil sur un ou plusieurs canaux appartenant à un groupe d'un ou de plusieurs canaux sur lesquels plus de points d'accès dans une population de points d'accès sont déployés ; et
de balayer pour des réseaux locaux sans fil sur un ou plusieurs canaux sur lesquels moins de points d'accès dans la population sont déployés,
dans lequel le balayage sur le ou les plusieurs canaux appartenant au groupe se produit plus souvent que le balayage sur le ou les plusieurs canaux sur lesquels moins de points d'accès dans la population sont déployés, et
dans lequel le groupe est codé en dur ou peut être programmé dans le dispositif client (600).

5. Procédé de la revendication 4, dans lequel le balayage sur le canal ou les plusieurs canaux appartenant au groupe comprend le fait :
de balayer plus d'une fois dans une session de balayage unique sur le ou les plusieurs canaux appartenant au groupe.

6. Procédé de la revendication 4, dans lequel le balayage sur le ou les plusieurs canaux appartenant au groupe comprend le fait de balayer une fois par session de balayage sur le ou les plusieurs canaux appartenant au groupe, où le ou les plusieurs canaux, sur lesquels moins de points d'accès dans la population sont déployés, sont divisés en N autres groupes qui sont codés en dur ou peuvent être programmés dans le dispositif client (600), où N est un nombre entier supérieur ou égal à deux, et où le balayage sur le ou les plusieurs canaux sur lesquels moins de points d'accès dans la population sont déployés comprend le fait de balayer une fois par N sessions de balayage sur des canaux dans l'un des autres groupes.

7. Procédé de la revendication 4, dans lequel le balayage sur le ou les plusieurs canaux sur lesquels moins de points d'accès dans la population sont déployés comprend le fait de balayer une fois par session de balayage sur le ou les plusieurs canaux sur lesquels moins de points d'accès dans la population sont déployés, où le ou les plusieurs canaux, sur lesquels moins de points d'accès dans la population sont déployés, sont divisés en *N* autres groupes qui sont codés en dur ou peuvent être programmés dans le dispositif client (600), où *N* est un nombre entier supérieur ou égal à deux, et où le balayage sur le canal ou les plusieurs canaux appartenant au groupe comprend le fait de balayer *N* fois par session de balayage sur le canal ou les plusieurs canaux appartenant au groupe.

8. Procédé de l'une quelconque des revendications 4 à 7, dans lequel la population est une population globale de points d'accès dans le monde entier ou dans un domaine de régulation unique ou dans un pays unique.

9. Procédé de la revendication 8, comprenant en outre le fait :
de déterminer, là où la population est une population globale de points d'accès dans un domaine de régulation unique, que le dispositif client (600) se trouve dans un domaine de régulation différent du domaine de régulation unique, et par conséquent de balayer pour des réseaux locaux sans fil en utilisant un schéma de balayage qui prend en compte la prévalence relative de déploiement de points d'accès sur des canaux dans une population globale de points d'accès dans le domaine de régulation différent ; ou
de déterminer, là où la population est une population globale de points d'accès dans un pays unique, que le dispositif client (600) se trouve dans un pays différent du pays unique, et par conséquent de balayer pour des réseaux locaux sans fil en utilisant un schéma de balayage qui prend en compte la prévalence relative de déploiement de points d'accès sur des canaux dans une population globale de points d'accès dans le pays différent.

10. Procédé de la revendication 1 ou de l'une quelconque des revendications 4 à 7, dans lequel la population est constituée de points d'accès que le dispositif client (600) a précédemment détecté.

11. Dispositif client (600), comprenant :
un processeur (602) ;
une interface de réseau local sans fil (610) couplée au processeur (602), l'interface de réseau local sans fil (610) comprenant une unité de commande de réseau local sans fil (612) et une radio (614) ;
une antenne (616) couplée à la radio (614) ;
une mémoire (604) couplée au processeur (602), la mémoire (604) étant agencée pour stocker un moyen de code exécutable (618) qui, lorsqu'il est exécuté par le processeur (602), commande l'unité de commande de réseau local sans fil (612) pour effectuer le procédé tel que revendiqué dans l'une quelconque des revendications 1 à 3,
dans lequel la mémoire (604) est agencée pour stocker des indications de l'ordre des canaux.

12. Dispositif client (600) comprenant :
un processeur (602) ;
une interface de réseau local sans fil (610) couplée au processeur (602), l'interface de réseau local sans fil (610) comprenant une unité de commande de réseau local sans fil (612) et une radio (614) ;
une antenne (616) couplée à la radio (614) ; et
une mémoire (604) couplée au processeur (602), la mémoire (604) étant agencée pour stocker un moyen de code exécutable (618) qui, lorsqu'il est exécuté par le processeur (602), commande l'unité de commande de réseau local sans fil (612) pour balayer pour des réseaux locaux sans fil en utilisant un schéma de balayage qui est destiné à balayer sur des canaux appartenant à un groupe d'un ou de plusieurs canaux sur lesquels plus de points d'accès dans une population de points d'accès sont déployés et à balayer sur un ou plusieurs canaux sur lesquels moins de points d'accès dans la population sont déployés,
dans lequel le balayage sur des canaux appartenant au groupe d'un ou de plusieurs canaux sur lesquels plus de points d'accès dans la population de points d'accès sont déployés se produit plus souvent que le balayage sur le ou les plusieurs canaux sur lesquels moins de points d'accès dans la population de points d'accès sont déployés ; et
dans lequel la mémoire (604) est agencée pour stocker des indications selon lesquelles des canaux appartiennent au groupe.

13. Dispositif client (600) de la revendication 12, dans lequel la population est une population globale de points d'accès dans le monde entier ou dans un domaine de régulation unique ou dans un pays unique.

14. Dispositif client (600) de la revendication 12, dans lequel la population est constituée de points d'accès que le dispositif client (600) a précédemment détecté.
